# FASCICULE DE BREVET EUROPEEN

(11) **EP 1 550 884 B1**
(45) Date de publication et mention de la délivrance du brevet: **05.07.2017**
(21) Numéro de dépôt: 04107019.4
(22) Date de dépôt: 28.12.2004
(51) Int. Cl.: G01T 1/17, G01T 1/172

(54) **Système de détection de rayonnements comportant une pluralité d'éléments détecteurs ayant chacun un circuit d'acquisition et de comptage**
Strahlungsdetektor mit einer Mehrzahl von Detektorelementen, jedes mit einer Erfassungsschaltung und einer Zählschaltung
Radiation detector comprising a plurality of detector elements, each having an acquisition and a counting circuit

(30) Priorité: 30.12.2003 FR 0351233
(43) Date de publication de la demande: 06.07.2005
(73) Titulaire: Commissariat à l'Énergie Atomique et aux Énergies Alternatives, 75015 Paris (FR)
(72) Inventeur: Rostaing, Jean-Pierre, 38260, LA COTE SAINT ANDRE (FR); Beigne, Edith, F-38112, MEAUDRE (FR)
(74) Mandataire: Ahner, Philippe

(56) Documents cités:
- WO-A1-01/27656
- GB-A- 1 406 685
- US-A- 4 658 216
- DATABASE WPI Section EI, Week 197501 Derwent Publications Ltd., London, GB; Class S03, AN 1975-A0844W XP002288066 -& SU 409 164 A (NUCLEAR RES INST) 27 juin 1974 (1974-06-27)

## Description

### DOMAINE ET ETAT DE LA TECHNIQUE

La présente invention a trait à un dispositif de détection de rayonnement et concerne de manière générale le domaine de la détection et de la mesure d'exposition à tout type de rayonnements de nature corpusculaire ou ondulatoire, comme les particules et les photons, notamment les radiations de protons, neutrons, électrons, positrons, les rayonnements *α,β,γ,* les photons de rayons X, les photons de lumière visible et les photons en dehors du visible.

L'invention s'applique, entre autre, à des dispositifs de détection à architecture matricielle utilisés en imagerie, notamment dans le domaine de la radiologie où l'on fait appel à des imageurs matriciels à rayons X, couramment appelés « senseurs ».

On connaît dans l'état de la technique des dispositifs de détection de rayonnements dont la structure est formée d'un ou plusieurs éléments détecteurs associés à une électronique de traitement et de comptage des impulsions générées par l'élément de détection lors d'un évènement de capture d'un photon ou d'une particule.

On connaît en particulier des dispositifs de mesure de rayonnements agencés selon une architecture matricielle qui comporte une entité de détection associée à une entité électronique de traitement/acquisition.

L'ensemble matriciel formé par l'entité de détection (communément appelée «circuit de détection») associé à l'entité électronique d'acquisition et de comptage, (communément appelé «circuit de lecture») constitue un « senseur ».

L'entité de détection peut être formé par un gaz, un scintillateur associé à un semi-conducteur, ou par des couches de matériau détecteur, qui absorbent les photons ou les particules et les transforment finalement en impulsions électriques (paquet de charges électroniques).

L'expression de « paquet de charges » désigne ici de manière générale, des paquets de charges positives ou négatives notamment des trous ou des électrons ou des paires positrons-électrons.

L'entité électronique est formée d'un agencement matriciel de circuits électroniques de traitement et d'acquisition ayant pour fonction d'effectuer un comptage des évènements de détection des photons ou des particules.

Les circuits électroniques matriciels peuvent être réalisés en technologie silicium, par exemple en filière Bipolaire, CMOS ou BiCMOS.

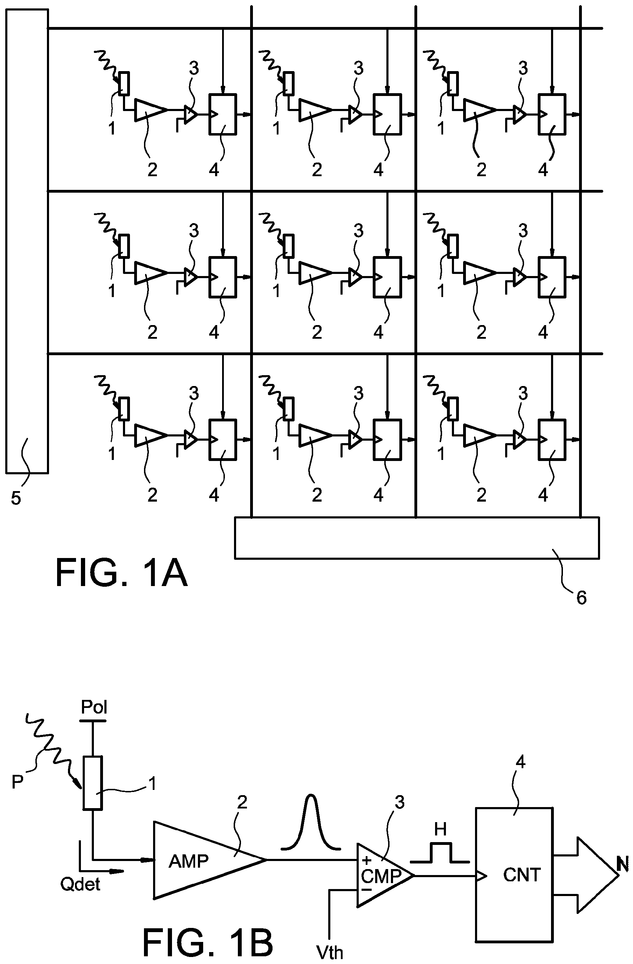

La figure 1A montre la structure matricielle d'un imageur de type connu.

L'imageur comporte une pluralité d'éléments détecteurs 1 qui peuvent être constitués d'éléments discrets tels que des tubes de scintillateurs à gaz ou d'un continuum de détecteurs élémentaires formés dans une ou plusieurs couches de matériau de détection, par exemple un semi-conducteur.

Chaque élément détecteur 1 est associé à une chaîne 1,2,3,4 d'acquisition et de comptage ayant pour fonction de traiter les impulsions électriques issues du détecteur et de compter les évènements de détection correspondant normalement à la capture d'un photon ou d'une particule.

La figure 1B montre un schéma de principe de circuit d'acquisition de type connu. L'élément détecteur 1 soumis à une tension de polarisation Pol, est relié à un circuit d'amplification 2 qui a pour fonction de convertir chaque paquet de charge Qdet généré par le détecteur en signal de tension. Les impulsions du signal de tension sont appliquées en entrée + d'un comparateur CMP de façon à détecter les impulsions de signal qui ont suffisamment d'amplitude pour franchir un niveau de seuil de tension Vth et à délivrer des impulsions calibrées H qui sont appliquées en entrée d'un circuit logique 4 constitué d'un compteur binaire CNT. Le compteur CNT comptabilise chaque impulsion H issue de la chaîne d'acquisition du détecteur 1 et enregistre en mémoire le nombre total N d'impulsions détectées qui correspond normalement au nombre d'évènements de capture d'un photon ou d'une particule P par le détecteur 1. L'ensemble formé de l'association d'un élément détecteur avec un circuit d'acquisition et de comptage d'événement forme ce qu'on appelle un pixel dans un imageur.

Pour chaque particule détectée dans l'élément semi-conducteur 1, le compteur 4 du détecteur de particules doit être incrémenté d'une unité. Ne pas incrémenter le compteur revient à ne pas utiliser la particule détectée et, partant, à dégrader la statistique et la qualité de l'image réalisée.

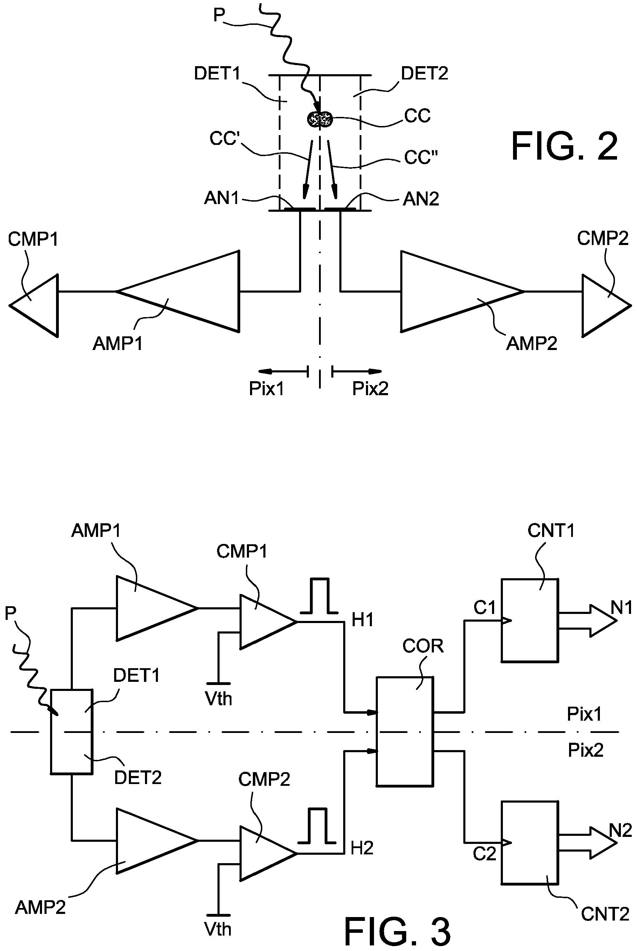

La figure 2 schématise les phénomènes qui se produisent lors de l'interaction d'un photon ou d'une particule P à la frontière entre deux éléments détecteurs DET1 et DET2 correspondant à deux pixels voisins PIX1 et PIX2.

Lorsque la particule ou le photon P crée des charges en même lieu de la couche de détection dans la zone médiane séparant deux éléments détecteurs DET1/DET2, c'est-à-dire la zone normale à la frontière entre deux pixels voisins, le « nuage » de charges CC risque de se partager en deux paquets de charges CC' et CC" à l'approche des anodes AN1/AN2 des deux détecteurs. Ainsi, les paquets de charges CC' et CC", qui ne sont pas nécessairement de charges égales, atteignent au même instant les deux anodes AN1 et AN2 qui sont reliées à deux chaînes d'acquisition AMP1-CMP1 et AMP2-CMP2. Il y a alors déclenchement des deux comparateurs CPM1 et CMP2 dans les deux pixels PIX1 et PIX2, ce qui provoque un comptage double alors qu'il n'y a eu qu'une seule interaction : il y a génération d'un faux évènement, ce qui est au moins aussi grave que de ne pas compter un vrai évènement.

Ainsi, lorsqu'une particule est absorbée en un lieu proche de la frontière entre deux éléments détecteurs mitoyens, les charges délivrées peuvent se répartir dans les couches d'absorption des deux pixels voisins, principalement à cause de phénomènes de diffusion. Deux particules sont comptées alors qu'une seule devrait l'être. Ce problème se pose avec d'autant plus d'acuité que les dimensions des détecteurs élémentaires sont petites, ce qui est le cas, par exemple, en mammographie. L'évolution des technologies conduisant à une miniaturisation des circuits, ce problème est destiné à se rencontrer de plus en plus souvent dans d'autres applications.

Une solution connue qui fonctionne bien avec des sources de rayonnement synchrotron et avec des couches de détection en silicium ou en arséniure de gallium, consiste à régler le seuil des comparateurs CMP1 et CMP2 au plus près d'une amplitude égale à la moitié de l'amplitude de l'impulsion électrique que génère la particule détectée. Dans ce cas, seul le pixel détecteur qui a collecté plus de la moitié des charges compte la particule. Cette solution résout de nombreux cas. Il reste cependant le problème des particules détectées très près de la frontière entre deux pixels voisins et le problème des dispersions de réglages.

Un autre inconvénient de cette solution consiste en ce qu'elle ne s'applique pas au domaine de la radiologie classique, et ceci pour deux raisons. Tout d'abord, les tubes générateurs de rayons X émettent un spectre continu d'énergie. Le rapport entre l'énergie maximale émise et l'énergie minimale émise est typiquement de 2 à 3. Cela n'a donc pas de sens de définir une amplitude moitié d'un photon « standard ». Ensuite, les matériaux détecteurs peuvent être des semi-conducteurs de qualité moindre que le silicium ou l'arséniure de gallium, tels que, par exemple, le sélénium (Se), le tellure de cadmium (CdTe), l'oxyde de plomb (PbO), l'iodure de plomb (PbI2), l'iodure de mercure (HgI2), le bromure de thallium (TIBr). Dans ces matériaux, les propriétés de transport des charges électroniques sont médiocres et la charge finalement lue dépend de la profondeur d'absorption du photon X dans la couche. Cette profondeur peut varier de façon importante et aléatoire d'un photon absorbé à l'autre. Dans ce cas également, cela n'a pas de sens de définir une amplitude moitié de l'amplitude d'un photon détecté.

Une autre parade possible au double comptage est de faire en sorte que la première impulsion CC' qui apparaît dans le temps soit comptabilisée et que la seconde impulsion CC' qui apparaît ensuite ne soit pas prise en compte.

Une seule impulsion est comptée, ce qui est conforme à l'hypothèse « un seul évènement ».

Cependant, cette solution exclut par principe tout évènement dans le pixel voisin PIX2 après la détection de la première impulsion CC' dans le pixel PIX1, ce qui écarte donc les interactions dues à d'autres photons, qui sont de vrais évènements.

Ce problème de perte d'informations est d'autant plus important que le flux de rayonnement est élevé.

L'objet de l'invention est de réaliser un dispositif de détection de rayonnements ne présentant pas de tels inconvénients.

Un objectif de l'invention est de fournir un système de détection permettant d'identifier de vrais évènements par rapport à de faux évènements.

L'objectif de l'invention est d'obtenir un système permettant le comptage de deux vrais évènements occasionnés par deux interactions en évitant le comptage superfétatoire d'un faux évènement lors d'une seule interaction.

Un autre objectif de l'invention est de fournir un système de détection permettant de distinguer de vrais évènements d'un faux, à une fréquence de travail élevé (donc sous un flux élevé de particules ou de photons) aussi bref soit l'intervalle de temps séparant deux impulsions.

Le but de l'invention est finalement de différencier le cas où un seul photon ou une particule unique arrive sur deux pixels voisins, et le cas où deux photons ou deux particules arrivent sur deux pixels voisins.

### EXPOSÉ SOMMAIRE DE L'INVENTION

De façon surprenante, l'invention prévoit de différencier la nature des évènements en analysant la corrélation chronologique des impulsions de signal électrique correspondant à ces évènements, l'analyse permettant de distinguer les cas suivantes :
- cas de corrélation de deux impulsions ou de coïncidence chronologique des deux impulsions, dans lequel la base de temps d'une impulsion issue d'un détecteur coïncide sensiblement avec la base de temps d'une autre impulsion issue d'un détecteur voisin. Ce cas correspond à une seule interaction donc à un seul événement corrélé avec un faux événement. Plus précisément, l'une des deux impulsions générée présente une base de temps plus large que l'autre impulsion, la base de temps de la première impulsion recouvrant la base de temps plus petite de la seconde impulsion. Les deux impulsions issues d'une seule interaction présentent des fronts de transition selon la séquence suivante :
   - front initial du premier signal,
   - front initial du deuxième signal,
   - front final du deuxième signal et,
   - front final du premier signal.
- cas de décorrélation de deux impulsions ou d'absence de coïncidence chronologique de deux impulsions, dans lequel la base de temps d'une impulsion issue d'un détecteur ne coïncide pas avec la base de temps d'une autre impulsion issue d'un détecteur voisin. Ce cas correspond à deux vrais évènements décorrélés. Les deux impulsions générées présentent des bases de temps de même grandeur. Elles peuvent se recouvrir partiellement mais elles sont alors décalées dans le temps. Plus précisément, les deux impulsions issues de deux interactions fournissent des fronts de transition selon la séquence suivante :
   - front initial du premier signal,
   - front initial du deuxième signal,
   - front final du premier signal et,
   - front final du deuxième signal.

L'invention est réalisée avec un dispositifs de détection de rayonnements comportant une pluralité d'éléments détecteurs, chaque élément détecteur étant associé à un circuit d'acquisition correspondant de signaux d'impulsion et de comptage d'événements de détection, le dispositif comprenant des moyens de corrélations des événements de détection correspondant à au moins deux éléments détecteurs, les moyens de corrélation permettant de distinguer :
- des cas de corrélation (ou cas de coïncidence) en cas de recouvrement temporel d'un signal d'impulsion par un autre signal d'impulsion, notamment lorsque la base de temps d'une impulsion recouvre complètement la base de temps d'une autre impulsion, par rapport à :
- des cas de non-corrélation (ou d'anti-coïncidence) en cas de simple décalage temporel d'un signal d'impulsion par rapport à un autre signal d'impulsion, notamment lorsque la base de temps d'une impulsion recouvre partiellement ou ne recouvre pas la base de temps d'une autre impulsion.

De façon avantageuse, les moyens de corrélation reçoivent au moins deux signaux d'impulsion provenant d'éléments détecteurs respectifs et contrôlent des moyens de comptage correspondant respectivement à chaque élément détecteur, de façon à comptabiliser un seul événement de détection lorsque deux signaux d'impulsions sont corrélés, c'est-à-dire concordent, convergent ou coïncident.

Selon l'invention, les moyens de corrélation d'événements sont aptes à comparer le recouvrement temporel d'un signal d'impulsion issu d'un élément détecteur par rapport à un autre signal d'impulsion issu d'un autre élément détecteur.

Il est prévu selon l'invention que les moyens de corrélation sont aptes à :
- incrémenter des moyens de comptage correspondant à chaque signal d'impulsion issu d'un élément détecteur respectif, tant qu'un signal d'impulsion se produit isolément,
- incrémenter uniquement l'un des moyens de comptage correspondant lorsque deux signaux d'impulsions sont corrélés, la durée de la première impulsion recouvrant temporellement la durée de la deuxième impulsion ; et/ou,
- incrémenter les deux moyens de comptage correspondants lorsque deux signaux d'impulsions sont décorrélés, la durée de la première impulsion ne recouvrant pas temporellement ou recouvrant partiellement la durée de la seconde impulsion.

Selon un mode de réalisation de l'invention, les moyens de corrélation disposent d'une logique asynchrone apte à comparer les chronologies d'occurrence des fronts de transition d'au moins deux signaux d'impulsions issus d'éléments détecteurs respectifs.

Il est prévu que les moyens de corrélation détectent :
- un cas de corrélation/coïncidence, lorsque un front initial d'un premier signal d'impulsion est suivi par un front initial d'un deuxième signal d'impulsion qui est lui-même suivi par un front final du deuxième signal d'impulsion, ou bien,
- un cas de non-corrélation (anti-coïncidence), lorsque un front initial d'un premier signal d'impulsion est suivi par un front initial d'un deuxième signal d'impulsion qui est lui-même suivi par un front final du premier signal d'impulsion.

### BREF EXPOSE DES DESSINS

D'autre buts, caractéristiques et avantages de l'invention apparaîtront à la lecture de la description ci-après de modes de réalisation, donnés uniquement à titre d'exemples non limitatifs, en relation avec les dessins annexés, sur lesquels :
- la figure 1A représente un schéma de principe d'un détecteur à architecture matricielle formée d'un réseau de pixels, selon l'état de la technique ;
- la figure 1B représente un schéma de principe d'une chaîne d'acquisition et de comptage d'impulsions issues d'un élément détecteur correspondant à un pixel, selon l'état de la technique ;
- la figure 2 schématise la détection d'une interaction à la frontière entre deux détecteurs mitoyens qui génère un problème de comptage de deux événements, selon l'état de la technique ;
- la figure 3 représente un schéma de principe d'un système de corrélation entre deux pixels, comportant deux chaînes d'acquisition et de comptage des impulsions issues de deux détecteurs voisins, selon l'invention ;
- les figures 4A - 5C représentent des chronogrammes des signaux d'impulsions lors de deux interactions rapprochées temporellement dans deux pixels ;
- les figures 6A - 6C représentent des chronogrammes des signaux d'impulsions lors d'une interaction à la frontière entre deux pixels ;
- la figure 7 est un bloc diagramme de moyens de corrélation mis en oeuvre dans un dispositif de détection de rayonnements selon l'invention ;
- la figure 8 représente des chronogrammes de signaux d'impulsions de détection et de signaux de comptage obtenus dans un dispositif selon l'invention lors d'une interaction à la frontière entre deux pixels ;
- la figure 9 représente des chronogrammes de signaux d'impulsions de détection et de signaux de comptage lors de deux interactions rapprochées dans deux pixels d'un dispositif selon l'invention ; et,
- la figure 10 représente un diagramme d'états de fonctionnement de moyens de corrélation d'évènements selon un mode de réalisation de l'invention.

### EXPOSÉ DÉTAILLÉ DE MODES DE RÉALISATION PARTICULIERS

Le principe de l'invention repose sur la distinction des vrais évènements, c'est-à-dire des signaux électriques crées par des interactions différentes, par rapport à de faux évènements, c'est-à-dire des signaux électriques issus d'une seule et même interaction.

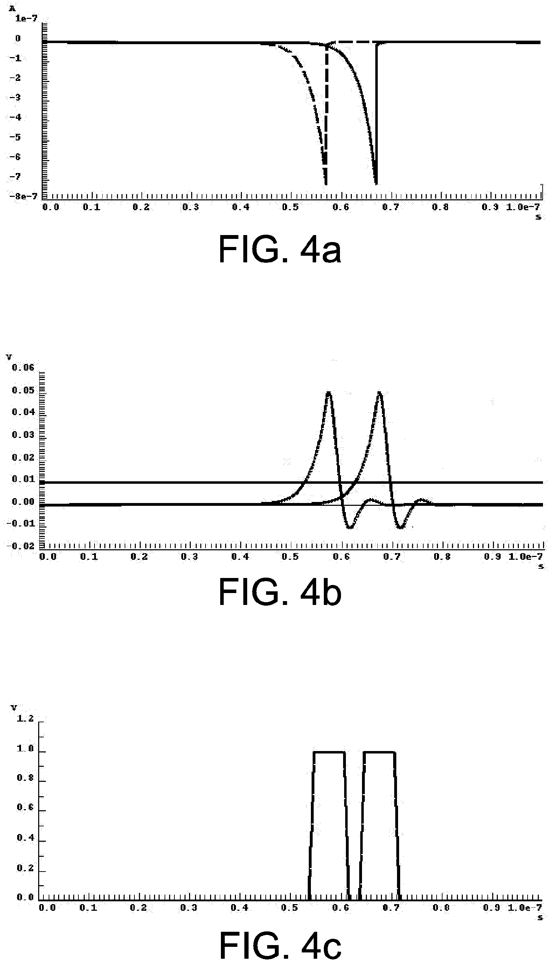

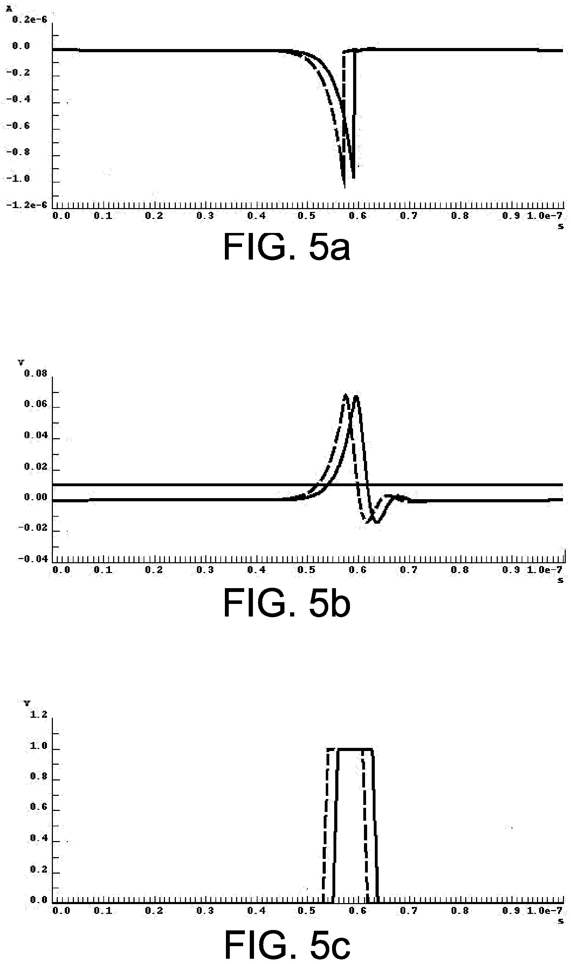

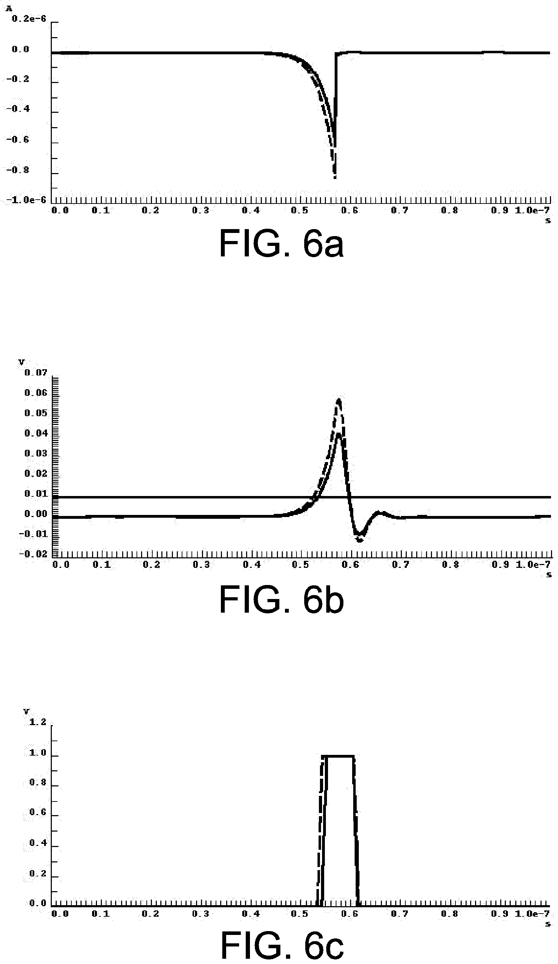

Les figures 4A - 6C montrent des résultats obtenus avec deux pixels voisins identiques disposant chacun de détecteurs et de circuits électroniques d'acquisition et de comptage identiques soumis à différents stimuli, selon les cas suivantes :
- 1^{er} cas (figures 4A - 4C): deux particules ou photons distincts P' et P" d'énergie quelconque séparés dans le temps, interagissent dans chacun des pixels PIX 1 et PIX2. Dans ce premier cas, les signaux issus des comparateurs sont décalés dans le temps et ne se recouvrent pas. Chaque impulsion est isolée. Dans ce cas simple, chaque évènement est pris en compte et ne nécessite aucune disposition particulière.
- 2^{ème} cas (figures 5A - 5C) : deux photons d'énergie quelconque, rapprochés dans le temps, interagissent dans chacun des pixels : les deux impulsions se recouvrent mais sont décalées par translation dans le temps. Il y a un recouvrement partiel d'une impulsion par l'autre impulsion, les deux impulsions ayant des durées du même ordre.
- 3^{ème} cas (figures 6A - 6C) : un photon ou une particule P d'énergie quelconque génère des charges qui se partagent en deux paquets CC' et CC". On observe qu'une impulsion est plus grande que l'autre, si bien que les deux comparateurs CMP1 et CMP2 ne commuteront pas simultanément. Les signaux d'impulsions issus des comparateurs se recouvrent.

Ainsi, de façon surprenante selon l'invention, on constate que l'on peut identifier la nature des évènements par leur corrélation :
- Deux vrais évènements sont 'décorrélés' ; ils peuvent se recouvrir chronologiquement, par translation dans le temps. D'après l'invention, on découvre une séquence de fronts de transition des signaux d'impulsions qui suit l'ordre suivant :
   - front initial du premier signal, suivi du,
   - front initial du deuxième signal, suivi du,
   - front final du premier signal suivi enfin du,
   - front final du deuxième signal.
- Deux faux évènements sont corrélés ; le signal d'impulsion le plus grand a une base de temps plus large qui recouvre la base de temps réduite du signal d'impulsion le plus petit. D'après l'invention, on découvre une autre séquence de fronts de transition des impulsions qui suit l'ordre suivant :
   - front initial du premier signal, suivi du,
   - front initial du deuxième signal, suivi du,
   - front final du deuxième signal, suivi enfin du,
   - front final du premier signal.

Le vocabulaire utilisé dans la présente fait usage de plusieurs termes pour différencier ces cas de figures bien distincts :
- 1^{er} cas de figure : deux évènements ne présentant aucun lien se produisent isolément de manière suffisamment éloignée dans le temps pour que les signaux ne présentent aucun recouvrement. Il n'y a aucune corrélation.

Par contre, lorsque deux impulsions se produisent de manière concomitante dans des intervalles de temps proches, une des impulsions recouvrant au moins partiellement l'autre impulsion, on distingue, selon l'invention, deux autres cas de figure(s) :
- 2^{ème} cas de figure : deux évènements indépendants sont à l'origine de deux impulsions non-corrélées. On observe alors un décalage chronologique par translation dans le temps des signaux d'impulsions. D'après l'invention, on constate dans ce cas de figure qu'il y a recouvrement partiel mais pas total d'une des impulsion par l'autre impulsion. On parle ici d'impulsions divergentes.
- 3^{ème} cas de figure : on a affaire à deux impulsions liées à un seul évènement. Les deux impulsions sont corrélées et peuvent varier l'une en fonction de l'autre. D'après l'invention, on constate dans ce troisième cas de figure qu'il y a une concordance dans le temps, presque un synchronisme ou une coïncidence des deux impulsions, et plus précisément que les deux impulsions se recouvrent, se chevauchent totalement, l'une des impulsions ayant une base de temps plus large qui encadre la base de temps réduite de l'autre impulsion plus petite. On parlera ici d'impulsions concordantes ou convergentes, c'est-à-dire qui se recoupent totalement, même s'il n'y a pas de simultanéité exacte des deux fronts montants et des deux fronts descendants des deux impulsions.

Pour distinguer les vrais évènements des faux évènements, l'invention prévoit d'associer les circuits électroniques d'acquisition d'au moins deux pixels par l'intermédiaire d'un système de corrélation d'évènements permettant de confronter les signaux d'impulsions issus des différents éléments détecteurs correspondant à ces pixels.

La figure 3 montre le schéma de principe d'un système de corrélation selon l'invention dans lequel les moyens de corrélation sont reliés de façon à opérer une jonction entre deux chaînes d'acquisition correspondant à un premier et un deuxième pixel PIX1 et PIX2. Les moyens de corrélations sont insérés et/ou sont reliés de façon croisée entre, d'une part la ligne de sortie H1 de la première chaîne d'acquisition AMP1, CMP1 issue d'un premier élément détecteur DET1 et l'entrée C1 du premier circuit de comptage CNT1 du premier pixel PIX1, et d'autre part, entre la ligne de sortie H2 de la deuxième chaîne d'acquisition AMP2, CMP2 issue du deuxième élément détecteur DET2, et l'entrée C2 du deuxième circuit de comptage CNT2 du deuxième pixel PIX2.

Ainsi, le système de corrélation COR est disposé pour recevoir un premier signal d'impulsion issu d'un premier détecteur DET1 et un second signal issu d'un second détecteur DET2, de façon à pouvoir comparer leurs chronologies respectives et de façon à, délivrer, de manière coordonnée, un premier signal C1 d'incrémentation destiné au premier compteur CNT1 et un second signal C2 d'incrémentation destiné au second compteur CNT2.

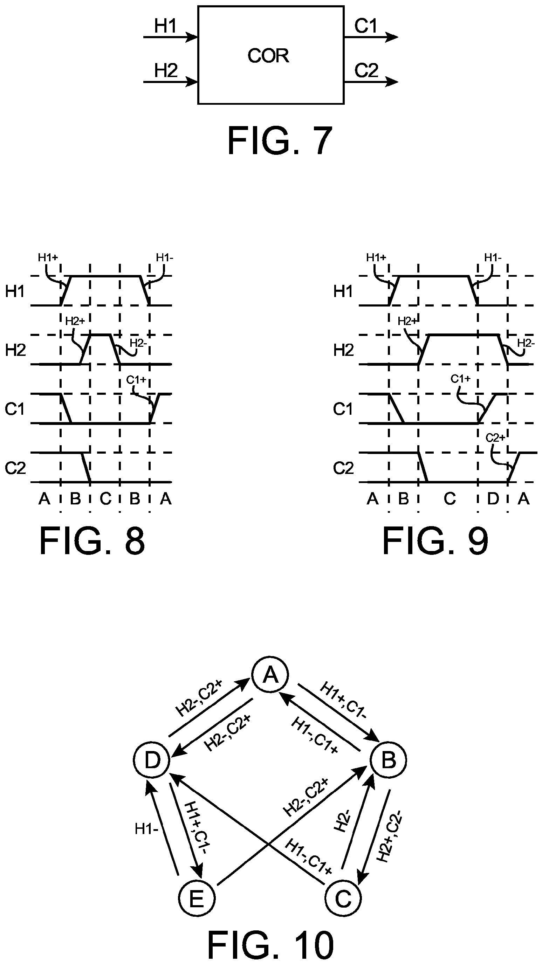

Ainsi, comme représenté sur la figure 7, les moyens de corrélation reçoivent au moins deux signaux d'impulsions de détection H1 et H2 provenant d'éléments détecteurs respectifs, et délivrent au moins deux signaux d'impulsions de comptage C1 et C2 destinées à incrémenter des moyens de comptage correspondant à chaque élément détecteur, de façon à comptabiliser un seul évènement de détection lorsque deux signaux d'impulsion concordent ou convergent.

Selon l'invention, les moyens de corrélation d'évènements sont aptes à comparer le recouvrement temporel d'un signal d'impulsion issu d'un élément détecteur par rapport à un autre signal d'impulsion issu d'un autre élément détecteur.

L'invention est réalisée avec un système logique qui détermine la nature de l'évènement - vrai ou faux - par l'analyse de la séquence incidente de signaux d'impulsions, et fournit en sortie un ou des signaux de comptage adaptés à chacun des pixels afin de compter les vrais évènements et de ne pas compter de faux évènement.

Le système logique d'anti-coïncidence qui fournit au pixel un signal adapté permettant de compter les vrais évènements et de ne pas compter les faux évènements est avantageusement réalisé en logique asynchrone.

Les systèmes asynchrones fonctionnent avec la seule connaissance de l'occurrence des évènements : c'est-à-dire que chaque transition sur une entrée ou une sortie contient une information et ce, indépendamment des variations temporelles entre ces transitions. Les systèmes asynchrones peuvent évoluer de façon localement synchronisée et le déclenchement des actions dépend uniquement de la présence d'un évènement à traiter.

Ce type de circuit est adapté à la réalisation de moyens de corrélation selon l'invention, permettant de distinguer des séquences de fronts de transition d'impulsions et de déclencher le comptage d'évènements décrit ci-dessus.

De façon avantageuse, le circuit asynchrone est à l'écoute des signaux transmis en entrée (évènements).

Avantageusement, le circuit asynchrone est apte à déclencher le traitement localement lorsque toutes les informations sont disponibles pour distinguer un vrai évènement d'un faux.

D'après l'invention, le circuit asynchrone doit produire en sortie des valeurs permettant le comptage ou non des évènements.

La figure 10 représente un diagramme d'états d'un système asynchrone à logique d'états permettant de réaliser les fonctions des moyens de corrélation énoncées précédemment.

Les figures 8 et 9 donnent des exemples de chronogrammes des signaux d'impulsions de détection H1, H2 et de comptage C1, C2 obtenus avec le système asynchrone, selon le mode de réalisation de la figure 10.

La figure 8 illustre un cas de corrélation correspondant à l'apparition de deux impulsions H1 et H2 convergentes (concordantes), l'impulsion H1 recouvrant totalement H2 dans ce cas.

La figure 9 illustre quant à elle, un cas d'absence de corrélation dans lequel apparaissent deux impulsions divergentes H1 et H2, dont les bases de temps se recouvrent partiellement, mais pas totalement.

Afin de distinguer un faux évènement de vrais évènements et de déclencher un seul comptage ou un double comptage d'évènements, les moyens de corrélation doivent identifier les deux séquences de transitions de niveaux d'impulsions indiquées dans le tableau ci-après.

**Tableau de corrélation en fonction des séquences de transitions de niveaux d'impulsions**

| Cas de figure | 2^{ème} cas - figures 5 et 9 | 3^{ème} cas - figures 6 et 8 |
|---|---|---|
| | Non-Corrélation | Corrélation |
| | 2 impulsions divergentes ne se recouvrant pas totalement | 2 impulsions concordantes l'une recouvrant totalement l'autre |
| Phénomène d'interaction | 2 vrais événements indépendants | 1 seul événement (1 faux événement) |
| Séquence de transitions d'impulsions | - front initial 1^{ère} impulsion | - front initial 1^{ère} impulsion |
| | - front initial 2^{ème} impulsion | - front initial 2^{e} impulsion |
| | - front final 1^{ère} impulsion | - front final 2^{e} impulsion |
| | - front final 2^{ème} impulsion | - front final 1^{ère} impulsion |
| Commande de comptage | 2 comptages d'évènements | 1 seul comptage d'évènement |
| | - incrémentation compteur n°1 | - incrémentation du compteur n°1 correspondant à la première impulsion. |
| | - incrémentation compteur n°2 | |
| | | - pas d'incrémentation autre compteur |

Il apparaît à l'examen du tableau précédent, que c'est à la troisième transition, c'est-à-dire au premier front final de la première impulsion H1 ou de la seconde impulsion H2, succédant aux fronts initiaux des impulsions H1 et H2, que le système à logique d'états peut se déterminer et discriminer s'il a affaire à un cas de corrélation ou de non-corrélation.

Ainsi, comme il apparaît sur les figures 8 et 9, le système à logique d'états peut incrémenter le premier compteur C1 correspondant au pixel où est apparu la première impulsion dès le front initial B de cette première impulsion.

Cependant, le système logique ne peut prendre la décision d'incrémenter ou pas le deuxième compteur C2 qu'après la troisième transition C/D ou C/B des signaux d'impulsion présents en entrée.

C'est uniquement dans le cas où le front final D de la première impulsion H1 apparaît en premier lieu (avant le front final de la deuxième impulsion) que le système à logique d'états « décide » d'incrémenter le deuxième compteur C2.

Le diagramme d'états du système logique asynchrone, illustré sur la figure 10 et correspondant aux séquences de conditions d'entrées et de consignes de sortie des figures 8 et 9, comportent cinq états A,B,C,D,E qui sont symétriques du point de vue des signaux H1/H2 et C1/C2.

Dans ce mode de réalisation et dans la description ci-après du fonctionnement des moyens de corrélation, le comptage d'événement est actif sur les fronts montants. Alternativement, dans d'autres modes de réalisation, une logique inverse peut être utilisée.

L'état initial A correspond à un état de repos dans lequel le système émet deux signaux de comptage C1 et C2 à un niveau de repos, ici le niveau logique 1. Cet état de repos se maintient tant que les signaux d'impulsion H1 et H2 restent à un niveau de repos, ici le niveau logique bas 0.

Lorsque le premier signal d'entrée H1 reçoit le front initial montant H1+ d'une impulsion issue du détecteur DET1, le système logique entre dans un cycle d'états B et C. Dans le premier état B de ce cycle, le premier signal de comptage C1 quitte le niveau de repos, ici 1, et prend un niveau actif, ici le niveau 0, le second signal de comptage C2 restant au niveau de repos 1. Le niveau de repos est en principe indifférent, ce peut être 0 ou 1.

Si un front final H1- survient dans l'état B, par exemple si l'impulsion H1 revient immédiatement au niveau de repos 0 (cas d'une impulsion H1 isolée), le système logique revient dans l'état initial A de repos et le premier signal de comptage C1 revient au niveau de repos 1. Au cours de ce cycle de transition A/B/A le compteur CNT1 est donc incrémenté d'une unité correspondant à l'évènement isolé H1 par exemple.

Par contre, comme illustré sur les figures 8 et 9, si le front montant H2+ d'une deuxième impulsion apparaît sur l'autre entrée H2 alors que le système logique est dans l'état B, c'est-à-dire pendant que la première impulsion H1 est toujours active au niveau 1 (front montant H2+ avant le front descendant H1-) le système logique entre dans un troisième état C et active le deuxième signal de comptage C2 au niveau 0.

A partir de ce troisième état C, le système logique peut effectuer soit un retour vers le deuxième état B du cycle A/B/C, soit une transition vers un quatrième état D appartenant à un autre cycle d'états A/D/E, selon que l'on se situe dans le cas de la figure 8 ou dans le cas de la figure 9, c'est-à-dire dans un cas de corrélation ou une absence de corrélation.

Dans le cas de corrélation, illustré figure 8, c'est-à-dire si la deuxième impulsion de signal H2 s'achève avant la fin de la première impulsion H1, donc si le front final de la deuxième impulsion H2- apparaît en premier lieu, le système retourne du troisième état C vers le deuxième état B, les signaux de comptage demeurant aux mêmes niveaux. Par suite, lorsque le front final de la première impulsion H1- apparaît en second lieu, comme sur le schéma de la figure 8, le système logique quitte ce deuxième état B pour retourner à l'état initial de repos A en activant une transition du premier signal de comptage C1+ qui passe au niveau 1 ici. Durant ce cycle de transition d'états A/B/C/B/A, le premier compteur CNT1 est donc incrémenté d'une unité par le front montant du signal C1, ici, tandis que le second compteur CNT2 n'est pas incrémenté, conformément aux dispositions dans le 3^{éme} cas (cf. commande de comptage du tableau précédent).

Ainsi, en cas de corrélation, comme représenté sur la figure 8, c'est-à-dire si la base de temps de l'impulsion H1 recouvre totalement l'impulsion H2 et que les fronts de transition H1+ et H1- encadrent les fronts de transition H2+ et H2-, le système logique effectue le cycle d'état A/B/C/B/A et seul le premier compteur C1 est incrémenté.

Maintenant, si, comme représenté sur la figure 9, le premier signal d'entrée H1 revient à l'état de repos 0 avant le deuxième signal d'entrée H2, c'est-à-dire dans le cas de non-corrélation où le front final H1- de la première impulsion H1 apparaît en premier lieu (avant tout front final H2- de l'impulsion du second signal d'entrée H2), le système logique effectue une transition du troisième état C vers un quatrième état D appartenant à un autre cycle A/D/E.

Lors de cette transition d'état C/D, le système logique modifie la sortie C1 qui passe au niveau 1. La transition de front montant C1+ incrémente le compteur CNT1.

Dans ce cas de non-corrélation, comme illustré figure 9, le front final H2- du second signal d'entrée H2 provoque le retour du quatrième état D à l'état de repos initial A et une transition C2+ du second signal de comptage C2 au niveau C2=1. La transition de front montant C2+ provoque l'incrémentation du deuxième compteur CNT2.

Ainsi dans le cas de non-corrélation illustré figure 9, le système logique suit la succession d'états A/B/C/D et chacun des deux compteurs CNT1 et CNT2 est incrémenté d'une unité, conformèment aux dispositions du 2^{éme} cas du tableau précédent.

A la fin des deux impulsions H1 et H2 des deux signaux d'entrée, le système logique selon l'invention a donc incrémenté d'une unité chacun des deux compteurs CNT1 et CNT2 correspondant à chacun des détecteurs DET1 et DET2, comptabilisant ainsi deux évènements conformément à l'objectif du traitement de deux vrais évènements non-corrélés.

Le diagramme d'état de la figure 10 montre encore que le système logique selon l'invention présente des transitions entre l'état initial A et le quatrième état D ainsi qu'entre celui-ci et un cinquième état E. En effet, si le système dans l'état de repos A reçoit un front montant d'impulsion H2+ en premier sur la deuxième entrée H2 (cas non illustré sur les diagrammes), il effectue une transition vers l'état D au cours de laquelle le deuxième signal de comptage C2- est mis au niveau 0. Si un front final H2- survient dans l'état D, par exemple si l'impulsion H2 revient immédiatement au niveau de repos 0 (cas d'une impulsion H2 isolée), le système logique retourne à l'état initial A de repos et le premier signal de comptage C2 revient au niveau 1 de sorte que le compteur CNT1 est incrémenté d'une unité correspondant à cet évènement isolé H1 au cours du cycle A/D/A.

La transition de l'état D vers l'état E s'effectue en cas de détection d'une transition de front montant H1+ du premier signal d'entrée H1 alors que le second signal d'entrée H2 est déjà dans l'état actif D. Dans ce cas, durant la transition d'état D/E le système logique génère un front descendant C1- sur la sortie du premier signal de comptage C1.

Lorsque le système logique est dans le cinquième état E et détecte le front final H1- de l'impulsion du premier signal d'entrée H1, c'est-à-dire si la première impulsion de signal H1 s'achève en premier lieu (avant tout front descendant du second signal d'entrée H2), le système logique retourne vers le quatrième état D, les signaux de comptage C1 et C2 demeurant aux mêmes niveaux.

Le cycle d'états A/D/E/D/A correspond à des opérations d'incrémentation INC2 du second compteur C2 et au traitement d'un autre cas de corrélation dans lequel une impulsion de signal H2 a une base de temps qui recouvre totalement celle d'une impulsion de signal H1 (cas non illustré) et dans lequel seul le compteur CNT2 est incrémenté au cours des changements d'états D/A).

Par contre, lorsque le système logique est dans le cinquième état E et que le front final H2- de l'impulsion du second signal d'entrée H2 apparaît en premier lieu, le système logique effectue une transition vers le deuxième état B au cours de laquelle le signal de sortie C2 change de niveau, pour prendre le niveau 1 ici. Cette transition de front montant C2+ du second signal de comptage incrémente le second compteur CNT2.

Durant la succession d'états A/D/E/B/A le système logique incrémente alors d'une unité le second compteur CNT2 (transition C2+ entre l'état E et B) puis le premier compteur CNT1 (transition C1+ entre l'état B et A). Cette succession d'états A/D/E/B/A correspond au traitement d'un autre cas de non-corrélation (non illustré) dans lequel les deux entrées H1 et H2 recoivent deux impulsions H1 et H2 de durées comparables, l'impulsion H1 ayant cette fois un décalage de retard par rapport à l'impulsion H2.

A la fin des deux impulsions H1 et H2 des deux signaux d'entrée, le système logique selon l'invention a donc incrémenté d'une unité chacun des deux compteurs CNT1 et CNT2 correspondant à chacun des détecteurs DET1 et DET2, comptabilisant ainsi deux évènements conformément à l'objectif du traitement de deux vrais évènements non-corrélés.

On peut remarquer que les conditions de transition H2+,H2- et H1+, H1- ainsi que les consignes de sortie C2-, C2+ et C1- des quatrième et cinquième états D et E sont les transpositions des conditions de transition H1+,H1- et H2+,H2- ainsi que des consignes de sortie C1-,C1+ et C2- respectives des deuxième et troisième état (par permutation de H1 et H2 ainsi que de C1 et C2), le diagramme d'état des moyens de corrélation illustrés figures 4,7,10 étant symétrique du point de vue des entrées H1 et H2 ainsi que des sorties C1 et C2.

Ainsi, selon un mode de réalisation présenté dans la figure 10, les moyens de corrélation COR reçoivent au moins un premier signal d'entrée H1 et un deuxième signal d'entrée H2 issus de deux éléments détecteurs et émettent en sortie au moins un premier et un deuxième signal de comptage (C1,C2), les moyens de corrélation disposant d'une logique d'état asynchrone A,B,C,D,E comportant :
- des moyens pour que, lorsque les signaux d'entrée sont dans un état initial A de repos H1=H2=0, le premier et le deuxième signal de comptage restent à un niveau de repos quelconque (par exemple C1=C2=0 ou C1=C2=1 ou C1 et C2 pouvant être égaux à 0 ou 1);
- des moyens A/B pour que, lorsque le premier signal d'entrée H1 passe de l'état A initial de repos à un état actif H1+, le premier signal de comptage est mis à un premier niveau C1- ;
- des moyens B/A pour que, lorsque le premier signal d'entrée H1- repasse de l'état actif B à l'état de repos A alors que le deuxième signal d'entrée H2 est au repos, le premier signal de comptage passe à un deuxième niveau C1+ ;
- des moyens B/C pour que, lorsque le deuxième signal d'entrée H2 passe à l'état actif H2+ alors que le premier signal d'entrée H1 est dans l'état actif, le deuxième signal de comptage passe à un premier niveau C2- ;
- des moyens C/D pour que, lorsque le premier signal d'entrée quitte l'état actif H1- alors que le deuxième signal d'entrée H2 est dans l'état actif, le premier signal de comptage passe à un second niveau C1+ ;
- des moyens A/D pour que, lorsque le deuxième signal d'entrée H2 passe de l'état initial de repos à un état actif H2+, le deuxième signal de comptage est mis à un premier niveau C2- ;
- des moyens D/A pour que, lorsque le deuxième signal d'entrée H2- repasse de l'état actif D à l'état de repos A alors que le premier signal d'entrée H1 est au repos, le deuxième signal de comptage passe à un deuxième niveau C2+ ;
- des moyens D/E pour que, lorsque le premier signal d'entrée H1 passe à l'état actif H1+ alors que le deuxième signal d'entrée H2 est dans l'état actif, le premier signal de comptage passe à un premier niveau C1- ; - des moyens E/B pour que, lorsque le deuxième signal d'entrée quitte l'état actif H2- alors que le premier signal d'entrée H1 est dans l'état actif, le deuxième signal de comptage passe à un second niveau C2+.

Ainsi, comme illustré sur les figures 8-9, lorsque apparaît un front initial H1+ d'un premier signal d'impulsion H1 issu d'un élément détecteur DET1 suivi par un front initial H2+ d'un deuxième signal d'impulsion H2 issu d'un autre élément détecteur DET2, les moyens de corrélation sont aptes à :
- générer un premier signal de comptage C1+ après l'apparition du front initial H1+ du premier signal d'impulsion, de façon à incrémenter l'un des moyens de comptage CNT1, et puis,
- soit générer un deuxième signal de comptage C2+ lorsque le front final H1- du premier signal d'impulsion H1 apparaît avant tout front final du second signal d'impulsion H2 (cas de la figure 9), de façon à incrémenter l'autre moyen de comptage CNT2,
- soit ne pas générer d'autre signal de comptage C2=0 si le front final H2- du deuxième signal d'impulsion H2 apparaît avant le front final H1- du premier signal d'impulsion H1.

Dans ce mode de réalisation des moyens de corrélation à logique d'états asynchrone, il apparaît que le système dispose de cinq états et consécutivement de cinq mémoires d'état.

L'exposé précédent des modes de réalisation de l'invention traite du cas de la corrélation des signaux d'impulsions H1 et H2 de deux chaînes d'acquisition AMP1/CMP1 et AMP2/CMP2 issues de deux éléments détecteurs mitoyens DET1 et DET2 (deux pixels voisins).

Afin de concevoir un dispositif selon l'invention, ou une machine à état selon l'invention, ou un dispositif ou une machine à état mettant en oeuvre un procédé selon l'invention, plusieurs solutions peuvent être envisagées : on peut soit utiliser des outils de synthèse spécifique à la synthèse de machine à états asynchrones, soit utiliser un langage de description adapté (tel que le CHP ou CSP) pour ensuite synthétiser ce circuit avec des outils de synthèse de circuits asynchrones. On peut se reporter au document de M.Renaudin et al. « A design framework for asynchronous/synchronous circuits based on CHP to HDL translation », IEEE, 1999, p.135 - 144.

De façon plus générale, les moyens de corrélation prévus selon l'invention peuvent être utilisés aussi bien pour rejeter les concordances d'évènements entre deux pixels voisins que pour accepter les concordances d'évènements entre des pixels quelconques, voisins ou non.

### EXEMPLES D'APPLICATION DE L'INVENTION

L'invention s'applique avantageusement aux dispositifs de détection de rayonnement agencés selon une architecture matricielle, dans lesquels la ou les couches de détections constituent un réseau de détecteurs élémentaires connexes associé à une matrice de chaîne d'acquisition, notamment ceux utilisés en imagerie.

Dans le cadre d'une telle application, chaque chaîne d'acquisition peut être reliée à plusieurs chaînes d'acquisition voisines, chaque liaison comportant des moyens de corrélation aptes à comparer le recouvrement temporel du signal électrique émis par la chaîne avec les signaux concernés par la liaison.

Ainsi, il est prévu que les moyens de corrélation des circuits d'acquisition et de comptage d'événements sont disposés selon un agencement matriciel, chaque moyen de corrélation étant relié à un élément détecteur respectif et à au moins un élément détecteur voisin, les moyens de corrélation étant aptes à comparer le recouvrement temporel des signaux d'impulsions reliés.

De façon avantageuse, l'invention améliore la qualité d'images obtenues avec des senseurs matriciels en évitant les pertes d'informations statistiques représentées par le comptage de faux évènements et améliore les performances et la qualité de l'imageur, comme le contraste et le piqué de l'image.

L'invention s'applique en particulier avantageusement au domaine de l'imagerie médicale, notamment de l'imagerie à rayons X, domaine dans lequel toute perte d'information ou dégradation des performances serait préjudiciable à la qualité du diagnostic.

Autre exemple d'application particulière, l'invention convient aux dispositifs de tomographie numérique, connus sous l'appellation de scanners, et dans lequel il est avantageux de pouvoir rejeter les corrélations ou coïncidences entre pixels voisins.

L'invention s'applique encore au cas de la tomographie à émission de paires électrons-positons (TEP). Dans ce cas, chaque recombinaison d'un électron avec un positon engendre l'émission simultannée de deux rayons *γ* dans des directions opposées à un angle de 180°.

Dans ce tomographe, pour reconnaître qu' un rayonnement *γ* capté par un premier détecteur et un autre rayonnement *γ* capté par un second détecteur, situé dans la zone opposée au premier, sont originaires d'une vraie recombinaison et non pas de faux événements non-corrélés (désintégrations, émissions de rayons *γ* quelconques...) ainsi que pour localiser le lieu et plus précisément le point d'origine de l'émission des deux rayonnements *γ*, on détecte les coïncidences de capture de deux photons *γ* par deux détecteurs situés dans des zones opposées. De façon avantageuse, selon l'invention, les moyens de corrélation sont mis en oeuvre pour détecter de telles coïncidences, à ceci près que cette fois on accepte les coïncidences, c'est-à-dire que en cas de corrélation de détection d'événements par deux détecteurs situés dans des zones opposées, on accepte la corrélation au lieu de rejeter ce cas, et on incrémente un compteur correspondant. Par suite, en cas de non corrélation, c'est-à-dire en cas de détection d'événements de détection décalés dans le temps qui ne correspondent donc pas à une vraie recombinaison, on considère qu'il s'agit de faux événements et le compteur associé aux deux détecteurs n'est pas incrémenté.

L'invention peut réalisée d'autre part avec un dispositif de détection de rayonnements comportant une pluralité d'éléments détecteurs, chaque élément détecteur étant associé à un circuit d'acquisition de signaux d'impulsion et de comptage d'événements de détection, le dispositif comprenant des moyens de corrélation des événements de détection correspondant à deux éléments détecteurs et recevant les signaux d'impulsion provenant des éléments détecteurs respectifs, situé notamment dans des zones opposées, chaque moyens de corrélation contrôlant des moyens de comptage correspondant aux deux éléments détecteurs appariés et étant mis en oeuvre de façon à comptabiliser un événement de détection lorsque deux signaux d'impulsions sont corrélées (ou concordent) et à ne pas comptabiliser d'événement lorsque deux signaux d'impulsions divergent ou ne sont pas corrélés.

Outre les domaines de la radiologie et de la radiographie à rayons X, l'invention s'applique ainsi aux domaines de la mesure d'exposition à d'autres types de rayonnements, tels que l'imagerie à base d'émission de paires électrons-positons (caméra à positons), la télédétection de radiations *α,β,γ,* l'imagerie en lumière visible ou au-delà du visible (photons de rayonnement Ultraviolet et longueurs d'ondes en deçà, photons de rayonnements InfraRouge et longueurs d'ondes au-delà).

La réalisation d'un dispositif fonctionnant selon l'invention peut être mise en oeuvre conformément aux indications contenues dans la thèse de Pascal VIVET, 21 Juin 2001, intitulée « méthodologie de conception de circuits intégrés quasi-insensibles aux délais : application à l'étude et la réalisation d'un processeur RISC 16 bit asynchrone », Institut National Polytechnique de Grenoble.

## Revendications

1. Dispositif de détection de rayonnements comportant une pluralité d'éléments détecteurs (DET1,DET2), chaque élément détecteur (DET1) étant associé à un circuit (AMP1-CMP1) correspondant d'acquisition de signaux d'impulsion (H1) et de comptage (CNT1) d'événements de détection, le dispositif comportant des moyens (COR) de corrélation des événements de détection correspondant à au moins deux éléments détecteurs (DET1/DET2), **caractérisé en ce que** ces moyens de corrélation sont adaptés pour distinguer des cas (CO1) de corrélation ou de concordance, en cas de recouvrement temporel d'un signal d'impulsion (H2) par un autre signal d'impulsion (H2), et des cas (UNCO1/2) de non-corrélation, en cas de simple décalage temporel d'un signal d'impulsion (H2) par rapport à un autre signal d'impulsion (H1), avec recouvrement partiel de ces deux signaux.

2. Dispositif selon la revendication 1, dans lequel les moyens de corrélation (COR) sont adaptés pour recevoir au moins deux signaux d'impulsion (H1, H2) provenant d'éléments détecteurs respectifs (DET1, DET2) et pour contrôler des moyens de comptage (CNT1, CNT2) correspondant respectivement à chaque élément détecteur, de façon à comptabiliser (C1) un seul événement de détection lorsque deux signaux d'impulsions concordent (H1⊂H2).

3. Dispositif selon la revendication 1 ou 2, dans lequel les moyens (COR) de corrélation d'événements sont adaptés pour comparer le recouvrement temporel d'un signal d'impulsion (H1) issu d'un élément détecteur (DET1) par rapport à un autre signal d'impulsion (H2) issu d'un autre élément détecteur (DET2).

4. Dispositif selon l'une des revendications 1 à 3, dans lequel les moyens de corrélation (COR) sont adaptés pour distinguer des cas (CO1) de corrélation ou de concordance, dans lesquels la base de temps d'une impulsion (H1) recouvre complètement la base de temps d'une autre impulsion (H2), par rapport à des cas (UNCO1/2) de non-corrélation, dans lesquels la base de temps d'une impulsion (H1) recouvre partiellement ou ne recouvre pas la base de temps d'une autre impulsion (H2).

5. Dispositif selon l'une des revendications 1 à 4, dans lequel les moyens de corrélation (COR) sont adaptés pour:
- incrémenter (C1) des moyens de comptage (CNT1) correspondant à chaque signal d'impulsion (H1) issu d'un élément détecteur respectif (DET1), tant que le signal d'impulsion (H1) se produit isolément,
- incrémenter (C1) uniquement l'un des moyens de comptage correspondant (CNT1) lorsque deux signaux d'impulsions (H1, H2) sont corrélés (CO1), la durée de la première impulsion (H1) recouvrant temporellement la durée de la deuxième impulsion (H2); et/ou,
- incrémenter (C1,C2) les deux moyens de comptage correspondants (CNT1 & CNT2) lorsque deux signaux d'impulsions (H1,H2) sont décorrélés (UNCO1/2) la durée de la première impulsion (H1) recouvrant partiellement ou ne recouvrant pas temporellement la durée de la seconde impulsion (H2).

6. Dispositif selon l'une des revendications 1 à 5, dans lequel les moyens de corrélation (COR) disposent d'une logique asynchrone (a,b,c,d,e) apte à comparer les chronologies d'occurrence des transitions (H1+,H1-,H2+,H2-) d'au moins deux signaux d'impulsions (H1,H2) issus d'éléments détecteurs respectifs (DET1,DET2).

7. Dispositif selon l'une des revendications 1 à 6, dans lequel les moyens de corrélation (COR) sont adaptés pour détecter un cas de corrélation ou de concordance lorsque un front initial (H1+) d'un premier signal d'impulsion (H1) est suivi par un front initial (H2+) d'un deuxième signal d'impulsion (H2) qui est lui-même suivi par un front final (H2-) du deuxième signal d'impulsion.

8. Dispositif selon l'une des revendications 1 à 7, dans lequel les moyens de corrélation (COR) sont adaptés pour détecter un cas de non-corrélation lorsque un front initial (H1+) d'un premier signal d'impulsion (H1) est suivi par un front initial (H2+) d'un deuxième signal d'impulsion (H2) qui est lui-même suivi par un front final (H1-) du premier signal d'impulsion.

9. Dispositif selon l'une des revendications 1 à 8, dans lequel, lorsque apparaît un front initial (H1+) d'un premier signal d'impulsion (H1) issu d'un élément détecteur (DET1) suivi par un front initial (H2+) d'un deuxième signal d'impulsion (H2) issu d'un autre élément détecteur (DET2), les moyens de corrélation (COR) sont adaptés pour:
- générer un premier signal de comptage (C1) et,
- soit générer un deuxième signal de comptage (C2) lorsque (UNCO1/2) le front final (H1-) du premier signal d'impulsion apparaît avant le front final (H2-) du second signal d'impulsion,
- soit ne pas générer d'autre signal de comptage si le front final (H2-) du deuxième signal d'impulsion apparaît avant le front final (H1-) du premier signal d'impulsion.

10. Dispositif selon l'une des revendications 1 à 9, dans lequel les moyens de corrélation (COR) sont adaptés pour recevoir au moins un premier signal d'entrée (H1) et un deuxième signal d'entrée (H2) issus de deux éléments détecteurs (DET1,DET2) et émettre en sortie au moins un premier et un deuxième signal de comptage (C1,C2), les moyens de corrélation disposant d'une logique d'état asynchrone (A,B,C,D,E) comportant :
- des moyens pour que, lorsque les signaux d'entrée sont dans un état initial (A) de repos (H1=H2=0),le premier et le deuxième signal de comptage restent à un niveau de repos,
- des moyens (B) pour que, lorsque le premier signal d'entrée (H1) passe de l'état initial de repos à un état actif (H1+), le premier signal de comptage effectue une transition d'état vers un premier niveau (C1-),
- des moyens (C) pour que, lorsque le deuxième signal d'entrée (H2) passe à l'état actif (H2+) alors que le premier signal d'entrée (H1) est dans l'état actif, le deuxième signal de comptage effectue une transition d'état vers un premier niveau (C2-),
- des moyens (C/D) pour que, lorsque le premier signal d'entrée quitte l'état actif (H1-) alors que le deuxième signal d'entrée (H2) est dans l'état actif, le premier signal de comptage effectue une transition d'état vers un second niveau (C1+),
- des moyens (D) pour que, lorsque le deuxième signal d'entrée (H2) passe de l'état initial de repos à un état actif (H2+), le deuxième signal de comptage effectue une transition d'état vers un premier niveau (C2-),
- des moyens (E) pour que, lorsque le premier signal d'entrée (H1) passe à l'état actif (H1+) alors que le deuxième signal d'entrée (H2) est dans l'état actif, le premier signal de comptage effectue une transition d'état vers un premier niveau (C1-),
- des moyens (E/B) pour que, lorsque le deuxième signal d'entrée quitte l'état actif (H2-) alors que le premier signal d'entrée (H1) est dans l'état actif, le deuxième signal de comptage effectue une transition d'état vers un second niveau (C2+).

11. Dispositif selon l'une des revendications 1 à 10, dans lequel les moyens de corrélation (COR) disposent d'une logique d'état asynchrone comportant au moins cinq mémoires d'états (a,b,c,d,e).

12. Dispositif selon l'une des revendications 1 à 11, dans lequel les moyens de corrélation des circuits d'acquisition et de comptage d'événements sont disposés selon un agencement matriciel, chaque moyen de corrélation étant relié à un élément détecteur respectif et à au moins un élément détecteur voisin, les moyens de corrélation étant aptes à comparer le recouvrement temporel des signaux d'impulsions reliés.

## Patentansprüche

1. Vorrichtung zum Detektieren von Strahlungen, enthaltend eine Mehrzahl von Detektorelementen (DET1, DET2), wobei jedem Detektorelement (DET1) eine entsprechende Schaltung (AMP1 - CMP1) zum Erfassen von Impulssignalen (H1) und zum Zählen (CNT1) von Detektionsereignissen zugeordnet ist, wobei die Vorrichtung Mittel (COR) zur Korrelation der Detektionsereignisse enthält, die zumindest zwei Detektorelementen (DET1/DET2) entsprechen, **dadurch gekennzeichnet, dass** diese Korrelationsmittel dazu geeignet sind, Fälle (C01) von Korrelation bzw. Übereinstimmung bei zeitlicher Überlagerung eines Impulssignals (H2) mit einem weiteren Impulssignal (H1) und Fälle (UNCO1/2) von Nicht-Korrelation bei einfacher Zeitverschiebung eines Impulssignals (H2) gegenüber einem weiteren Impulssignal (H1) mit teilweiser Überlagerung dieser beiden Signale zu unterscheiden.

2. Vorrichtung nach Anspruch 1, wobei die Korrelationsmittel (COR) dazu ausgelegt sind, zumindest zwei Impulssignale (H1, H2) zu empfangen, die von jeweiligen Detektorelementen (DET1, DET2) stammen, und Zählmittel (CNT1, CNT2) zu steuern, die dem jeweiligen Detektorelement entsprechen, so dass ein einziges Detektionsereignis dann erfasst wird (C1), wenn beide Impulssignale übereinstimmen (H1 c H2).

3. Vorrichtung nach Anspruch 1 oder 2, wobei die Mittel (COR) zur Korrelation von Ereignissen dazu ausgelegt sind, die zeitliche Überlagerung eines von einem Detektorelement (DET1) stammenden Impulssignals (H) bezüglich eines weiteren, von einem weiteren Detektorelement (DET2) stammenden Impulssignals zu vergleichen.

4. Vorrichtung nach einem der Ansprüche 1 bis 3, wobei die Korrelationsmittel (COR) dazu geeignet sind, Fälle (CO1) von Korrelation bzw. Übereinstimmung, bei denen die Zeitbasis eines Impulses (H1) die Zeitbasis eines weiteren Impulses (H2) vollständig überlagert, gegenüber Fällen (UNCO1/2) von Nicht-Korrelation zu unterscheiden, bei denen die Zeitbasis eines Impulses (H1) die Zeitbasis eines weiteren Impulses (H2) teilweise oder gar nicht überlagert.

5. Vorrichtung nach einem der Ansprüche 1 bis 4, wobei die Korrelationsmittel (COR) dazu ausgelegt sind, um:
- Zählmittel (CNT1) zu inkrementieren (C1), die jedem von einem jeweiligen Detektorelement (DET1) stammenden Impulssignal (H1) entsprechen, solange das Impulssignal (H1) isoliert auftritt,
- nur eines der entsprechenden Zählmittel (CNT1) zu inkrementieren (C1), wenn zwei Impulssignale (H1, H2) korreliert werden (CO1), wobei die Zeitdauer des ersten Impulses (H1) die Zeitdauer des zweiten Impulses (H2) zeitlich überlagert; und/oder
- die beiden entsprechenden Zählmittel (CNT1 & CNT2) zu inkrementieren (C1, C2), wenn zwei Impulssignale (H1, H2) dekorreliert werden (UNCO1/2), wobei die Zeitdauer des ersten Impulses (H1) die Zeitdauer des zweiten Impulses (H2) zeitlich teilweise oder gar nicht überlagert.

6. Vorrichtung nach einem der Ansprüche 1 bis 5, wobei die Korrelationsmittel (COR) über eine asynchrone Logik (a, b, c, d, e) verfügen, die dazu geeignet sind, Chronologien des Auftretens von Übergängen (H1+, H1-, H2+, H2-) von zumindest zwei Impulssignalen (H1, H2) zu vergleichen, die von jeweiligen Detektorelementen (DET1, DET2) stammen.

7. Vorrichtung nach einem der Ansprüche 1 bis 6, wobei die Korrelationsmittel (COR) dazu ausgelegt sind, einen Fall von Korrelation bzw. Übereinstimmung zu detektieren, wenn eine ansteigende Flanke (H1+) eines ersten Impulssignals (H1) von einer ansteigenden Flanke (H2+) eines zweiten Impulssignals (H2) gefolgt wird, die ihrerseits von einer abfallenden Flanke (H2-) des zweiten Impulssignals gefolgt wird.

8. Vorrichtung nach einem der Ansprüche 1 bis 7, wobei die Korrelationsmittel (COR) dazu ausgelegt sind, einen Fall von Nicht-Korrelation zu detektieren, wenn eine ansteigende Flanke (H1+) eines ersten Impulssignals (H1) von einer ansteigenden Flanke (H2+) eines zweiten Impulssignals (H2) gefolgt wird, die ihrerseits von einer abfallenden Flanke (H1-) des ersten Impulssignals gefolgt wird.

9. Vorrichtung nach einem der Ansprüche 1 bis 8, wobei dann, wenn eine ansteigende Flanke (H1+) eines von einem Detektorelement (DET1) stammenden ersten Impulssignals (H1) von einer ansteigenden Flanke (H2+) eines von einem weiteren Detektorelement (DET2) stammenden zweiten Impulssignals (H2) gefolgt wird, die Korrelationsmittel (COR) dazu ausgelegt sind, um:
- ein erstes Zählsignal (C1) zu erzeugen und
- entweder ein zweites Zählsignal (C2) zu erzeugen, wenn (UNCO1/2) die abfallende Flanke (H1-) des ersten Impulssignals vor der abfallenden Flanke (H2-) des zweiten Impulssignals erscheint,
- oder kein weiteres Zählsignal zu erzeugen, wenn die abfallende Flanke (H2-) des zweiten Impulssignals vor der abfallenden Flanke (H1-) des ersten Impulssignals erscheint.

10. Vorrichtung nach einem der Ansprüche 1 bis 9, wobei die Korrelationsmittel (COE) dazu ausgelegt sind, zumindest ein erstes Eingangssignal (H1) und ein zweites Eingangssignal (H2) zu empfangen, die von zwei Detektorelementen (DET1, DET2) stammen, und am Ausgang zumindest ein erstes und ein zweites Zählsignal (C1, C2) auszusenden, wobei die Korrelationsmittel über eine asynchrone Zustandslogik (A, B, C, D, E) verfügen, enthaltend:
- Mittel, damit dann, wenn die Eingangssignale in einem anfänglichen Ruhezustand (A) (H1 = H2 = 0) vorliegen, das erste und das zweite Zählsignal auf einem Ruhepegel bleiben,
- Mittel (B), damit dann, wenn das erste Eingangssignal (H1) vom anfänglichen Ruhezustand in einen aktiven Zustand (H1+) übergeht, das erste Zählsignal einen Zustandsübergang zu einem ersten Pegel (C1-) vollzieht,
- Mittel (C), damit dann, wenn das zweite Eingangssignal (H2) in den aktiven Zustand (H2+) übergeht, während das erste Eingangssignal (H1) im aktiven Zustand ist, das zweite Zählsignal einen Zustandsübergang zu einem ersten Pegel (C2-) vollzieht,
- Mittel (C/D), damit dann, wenn das erste Eingangssignal den aktiven Zustand (H1-) verlässt, während das zweite Eingangssignal (H2) im aktiven Zustand ist, das erste Zählsignal einen Zustandsübergang zu einem zweiten Pegel (C1 +) vollzieht,
- Mittel (D), damit dann, wenn das zweite Eingangssignal (H2) vom anfänglichen Ruhezustand in einen aktiven Zustand (H2+) übergeht, das zweite Zählsignal einen Zustandsübergang zu einem ersten Pegel (C2-) vollzieht,
- Mittel (E), damit dann, wenn das erste Eingangssignal (H1) in den aktiven Zustand (H1+) übergeht, während das zweite Eingangssignal (H2) im aktiven Zustand ist, das erste Zählsignal einen Zustandsübergang zu einem ersten Pegel (C1-) vollzieht,
- Mittel (E/B), damit dann, wenn das zweite Eingangssignal den aktiven Zustand (H2-) verlässt, während das erste Eingangssignal (H1) im aktiven Zustand ist, das zweite Zählsignal einen Zustandsübergang zu einem zweiten Pegel (C2+) vollzieht.

11. Vorrichtung nach einem der Ansprüche 1 bis 10, wobei die Korrelationsmittel (COR) über eine asynchrone Zustandslogik verfügen, die zumindest fünf Zustandsspeicher (a, b, c, d, e) aufweist.

12. Vorrichtung nach einem der Ansprüche 1 bis 11, wobei die Korrelationsmittel für die Erfassungs- und Ereigniszählschaltungen gemäß einer Matrixanordnung angeordnet sind, wobei jedes Korrelationsmittel mit einem jeweiligen Detektorelement und mit zumindest einem benachbarten Detektorelement verbunden ist, wobei die Korrelationsmittel dazu ausgelegt sind, die zeitliche Überlagerung der verbundenen Impulssignale zu vergleichen.

## Claims

1. Radiation detection device comprising:
- a plurality of detector elements (DET1, DET2), each detector element (DET1) being associated with a different circuit (AMP1-CMP1) for acquiring pulse signals (H1) and counting detection events (CNT1), the device comprising correlation means (COR) of detection events corresponding to at least two detector elements (DET1, DET2),
**Characterized in that** said correlation are adapted to distinguish cases (CO1) of correlation or concordance, in the case of temporal overlap of a pulse signal (H2) by another pulse signal (H1), and cases (UNCO1/2) of non-correlation, in the case of a simple time lag of one pulse signal (H2) compared to another pulse signal (H1), said two signals partially overlapping.

2. Device according to claim 1, wherein said correlation means (COR) are adapted to receive at least two pulse signals (H1, H2) coming from respective detector elements (DET1,DET2) and to control counting means (CNT1, CNT2) respectively corresponding to each detector element, in such a way as to count (C1) a single detection event when two pulse signals concord (H1 ⊂ H2).

3. Device according to claim 1 or 2, wherein said correlation means (COR) of events are adapted to compare the temporal overlap of a pulse signal (H1) from one detector element (DET1) with respect to another pulse signal (H2) from another detector element (DET2).

4. Device according to any of claims 1 to 3, wherein the correlation means (COR) are adapted to distinguish cases (CO1) of correlation or concordance, in which the time base of a pulse (H1) completely overlaps the time base of another pulse (H2), compared to cases (UNC01/2) of non-correlation, in which the time base of a pulse (H1) partially overlaps or does not overlap the time base of another pulse (H2).

5. Device according to one of claims 1 to 4, wherein the correlation means (COR) are adapted to:
- increment (C1) counting means (CNT1) corresponding to each pulse signal (H1) from a respective detector element (DET1), as long as the pulse signal (H1) is produced in isolation,
- increment (C1) only one of the corresponding counting means (CNT1) when two pulse signals (H1, H2) are correlated (CO1), the duration of the first pulse (H1) overlapping in time the duration of the second pulse (H2); and/or,
- increment (C1, C2) the two counting means (CNT1, CNT2) when two pulse signals (H1, H2) are decorrelated (UNCO1/2), the duration of the first pulse (H1) partially overlapping or not overlapping in time the duration of the second pulse (H2).

6. Device according to any of claims 1 to 5, wherein the correlation means (COR) have an asynchronous logic (a,b,c,d,e) capable of comparing the occurrence chronologies of transitions (H1+, H1-, H2+, H2-) of at least two pulse signals (H1,H2) from respective detector elements (DET1, DET2).

7. Device according to one of claims 1 or 6, wherein the correlation means (COR) are adapted to detect a case of correlation or concordance when an initial front (H1+) of a first pulse signal (H1) is followed by an initial front (H2+) of a second pulse signal (H2) which is itself followed by a final front (H2-) of the second pulse signal.

8. Device according to one of claims 1 or 7, wherein the correlation means (COR) are adapted to detect a case of non-correlation when an initial front (H1+) of a first pulse signal (H1) is followed by an initial front (H2+) of a second pulse signal (H2) which is itself followed by a final front (H1-) of the first pulse signal.

9. Device according to one of claims 1 or 8, wherein:
when an initial front (H1+) of a first pulse signal (H1) from a detector element (DET1) appears followed by an initial front (H2+) of a second pulse signal (H2) from another detector element (DET2), the correlation means are adapted to:
- generate a first count signal (C1) and,
- either generate a second count signal (C2) when (UNCO1/2) the final front (H1-) of the first pulse signal appears before the final front (H2-) of the second pulse signal,
- or not generate another count signal if the final front (H2-) of the second pulse signal appears before the final front (H1-) of the first pulse signal.

10. Device according to claim 1 to 9, wherein the correlation means (COR) are adapted to receive at least one first input signal (H1) and a second input signal (H2) from two detector elements (DET1, DET2), and to emit at the output at least one first and one second count signal (C1, C2), said correlation means having an asynchronous logic state (A,B,C,D,E) comprising:
- means so that, when the input signals are in an initial (A) idle state (H1=H2=0), the first and the second count signals remain at an idle level;
- means (B) so that, when the first input signal (H1) goes from the initial idle state to an active state (H1+), the first count signal makes a state transition to a first level (C1-);
- means (C) so that, when the second input signal (H2) goes to the active state (H2+) while the first input signal (H1) is in the active state, the second count signal makes a state transition to a first level (C2-);
- means (C/D) so that, when the first input signal leaves the active state (H1-) while the second input signal (H2) is in the active state, the first count signal makes a state transition to a second level (C1+);
- means (D) so that, when the second input signal (H2) goes from the initial idle state to an active state (H2+), the second count signal makes a state transition to a first level (C2-);
- means (E) so that, when the first input signal (H1) goes to the active state (H1+) while the second input signal (H2) is in the active state, the first count signal makes a state transition to a first level (C1-);
- means (E/B) so that, when the second input signal leaves the active state (H2-) while the first input signal (H1) is in the active state, the second count signal makes a state transition to a second level (C2+).

11. Device according to one of claims 1 to 10, in which the correlation means (COR) have an asynchronous logic state comprising at least five state memories (a,b,c,d,e).

12. Device according to one of claims 1 to 11, wherein the correlation means of the acquisition and event counting circuits are laid out in a matrix arrangement, each correlation means being connected to a respective detector element and to at least one adjoining detector element, the correlation means being capable of comparing the temporal overlap of the corresponding pulse signals.
